# EUROPEAN PATENT SPECIFICATION

(11) **EP 3 888 202 B1**
(45) Date of publication and mention of the grant of the patent: **09.10.2024**
(21) Application number: 19817552.3
(22) Date of filing: 19.11.2019
(51) Int. Cl.: H01S 3/067, H01S 3/094, H01S 3/00, H01S 3/0941, H01S 3/16

(54) **TANDEM PUMPED FIBER AMPLIFIER**
TANDEMGEPUMPTER FASERVERSTÄRKER
AMPLIFICATEUR À FIBRE POMPÉE EN TANDEM

(30) Priority: 26.11.2018 US 201816200462
(43) Date of publication of application: 06.10.2021
(73) Proprietor: nLIGHT, Inc., Vancouver, WA 98665 (US)
(72) Inventor: KANSKAR, Manoj, Vancouver, WA 98665 (US); ZHANG, Jiamin, Vancouver, WA 98665 (US)
(74) Representative: Dehns
(86) International application number: PCT/US2019/062285
(87) International publication number: WO 2020/112447

(56) References cited:
- WO-A1-2010/083595
- US-A1- 2006 187 973
- US-A1- 2008 130 102
- US-A1- 2018 109 064
- US-A1- 2018 198 251
- PU ZHOU ET AL: "High-power fiber lasers based on tandem pumping", JOURNAL OF THE OPTICAL SOCIETY OF AMERICA - B., vol. 34, no. 3, 27 January 2017 (2017-01-27), US, pages A29, XP055446791, ISSN: 0740-3224, DOI: 10.1364/JOSAB.34.000A29
- WANG XUEJIAO ET AL: "The 5.4 kW output power of the ytterbium-doped tandempumping fiber amplifier", May 2018 (2018-05-01), XP093149386, ISBN: 978-1-943580-42-2, Retrieved from the Internet <URL:https://doi.org/10.1364/CLEO_AT.2018.AM2M.5> [retrieved on 20240409]

## Description

### Technical Field

The present disclosure relates to fiber amplifiers.

### Background

High average power fiber lasers with diffraction-limited beams that are suitable for High Energy Laser (HEL) applications are currently primarily limited in output power by Stimulated Brillouin Scattering (SBS) and Modal Instability. Some known systems have been effective to scale power to greater than the 2kW level by mitigating SBS. However, Model Instability may still bottleneck power-scaling in regular large-mode area (LMA) fiber, e.g., non-photonic-crystal fiber (PCF) and/or photonic bandgap (PBG) fiber. Specifically, Modal Instability may limit diffraction limited output power to a threshold near 2kW, such as ~2.2 kW for 20µm core step-index dual-clad fiber laser. US2008/0130102A1 discloses a fiber amplifier with an integrated fiber laser pump. US2018/0109064A1 discloses a tandem pumped fiber amplifier including a plural core fiber. US 2018/198251 A1, or Pu Zhou ET AL: "High-power fiber lasers based on tandem pumping",JOURNAL OF THE OPTICAL SOCIETY OF AMERICA - B., vol. 34, no. 3, 27 March 2017, page A29, XP055446791; or Wang Xuejiao ET AL: "The 5.4 kW output power of the ytterbium-doped tandem pumping fiber amplifier", CLEO: Applications and Technology 2018 San Jose, California United States 13-18 May 2018, XP093149386, each discloses a tandem pumped fiber amplifier including a single core fiber.

### Summary

According to a first aspect, there is provided a tandem pumped fiber amplifier as claimed in claim 1.

### Brief Drawings Description

The accompanying drawings, wherein like reference numerals represent like elements, are incorporated in and constitute a part of this specification and, together with the description, explain the advantages and principles of the presently disclosed technology.
FIG. 1 illustrates a tandem pumped fiber amplifier.
FIG. 2 illustrates a cross-section view of a coaxial dual active core fiber that may be utilized in a tandem pumped fiber amplifier not in accordance with claim 1.
FIGS. 3A-C illustrate, respectively, a graph of calculated signal power and tandem pump power inside a final power amplifier along with upper state population for a tandem pump fiber amplifier not in accordance with claim 1, a block diagram of the tandem pump fiber amplifier, and a cross-section view of a dual-core and all-glass-fiber of the tandem pump fiber amplifier.
FIG. 4 illustrates a refractive index of a fiber similar to the fiber of FIG. 3C.
FIG. 5 illustrates a cross-section view of a single active core fiber that may be utilized in the tandem pumped fiber amplifier of FIG. 1, in some embodiments.
FIGS. 6A-C illustrate, respectively, a graph of calculated signal power and tandem pump power inside a final power amplifier along with upper state population for a tandem pump fiber amplifier in accordance with claim 1, a block diagram of the tandem pump fiber amplifier, and a cross-section view of a single active core and all-glass-fiber of the tandem pump fiber amplifier.

### Detailed Description

The invention is defined in claim 1. Preferred embodiments of the invention are set out in the dependent claims. Core tandem-pumping may provide relatively high absorption and/or efficiency. As a result, fiber length may be relatively short, which may provide a relatively large margin for deleterious nonlinear effects such as SBS, SRS (stimulated Raman Scattering), FWM (four wave mixing), SPM (self-phase modulation), or the like, or combinations thereof. One embodiment provides a greater than 4kW single narrowband fiber amplifier.

Any tandem pumped fiber amplifier described herein may be less bulky (e.g., smaller and/or not as heavy) and/or less costly than a system using a 10kW single mode fiber laser in a regular LMA fiber using numerous 1018nm single mode tandem fiber lasers as high brightness pump sources. The tandem pumped fiber amplifiers may have lower power requirements and/or lower thermal dissipation requirements than such systems as well.

Whereas a system using a 10kW single mode fiber laser in a regular LMA fiber using numerous 1018nm single mode tandem fiber lasers as high brightness pump sources may require a reduction in quantum-defect heating from the usual ~9% in the 976nm pumped system down to ~4% in the tandem 1018nm pumped amplifiers to achieve 10kW, embodiments disclosed herein may not be subject to the same requirement in order to achieve 10kW or greater. A system employing a tandem pumped fiber amplifier may be compatible with regular LMA fiber technology but scalable from a few kilowatts to 10kW or more by scaling up the multimode diode laser pump power. As a result, embodiments described herein may simplify manufacturing in high energy laser applications. In a system employing a tandem pumped fiber amplifier, a final amplifier stage may be greater than 1kW to address Model Instability. A tandem pumped fiber amplifier may push the single channel output power to greater than known thresholds created by Modality Instability, such as 3kW, 5kW, 10kW, or more.

Several advantages of this approach have been identified. First, the quantum defect in the power amplifier may be only 1.5% at 1030nm when pumped at 1018nm, in some embodiments. At a nominal wavelength of 1064nm, this quantum defect is about 4%. Which is less than half compared to pumping at 976nm (which may be associated with a 8.4% quantum defect). Secondly, the signal injected into the power amplifier may be significantly greater than 0.1kW. Both factors may provide a higher threshold condition for Modal Instability. This may provide greater than 10kW of spectral beam combining (SBC) and coherent beam combining (CBC) combinable power. The tandem pumped fiber amplifier may use regular LMA fiber technology without compromising the total efficiency of the system. All of this can be achieved by pumping with low SWAP (size, weight and power) and low-cost multimode diode pumps rather than using a multitude of expensive and bulky single mode fiber lasers.

As used in this application and in the claims, the singular forms "a," "an," and "the" include the plural forms unless the context clearly dictates otherwise. Additionally, the term "includes" means "comprises." Further, the term "coupled" does not exclude the presence of intermediate elements between the coupled items. The systems, apparatus, and methods described herein should not be construed as limiting in any way. Instead, the present disclosure is directed toward all novel and non-obvious features and aspects of the various disclosed embodiments, alone and in various combinations and sub-combinations with one another.

The disclosed systems, methods, and apparatus are not limited to any specific aspect or feature or combinations thereof, nor do the disclosed systems, methods, and apparatus require that any one or more specific advantages be present or problems be solved. Any theories of operation are to facilitate explanation, but the disclosed systems, methods, and apparatus are not limited to such theories of operation. Although the operations of some of the disclosed methods are described in a particular, sequential order for convenient presentation, it should be understood that this manner of description encompasses rearrangement, unless a particular ordering is required by specific language set forth below. For example, operations described sequentially may in some cases be rearranged or performed concurrently. Moreover, for the sake of simplicity, the attached figures may not show the various ways in which the disclosed systems, methods, and apparatus can be used in conjunction with other systems, methods, and apparatus.

Additionally, the description sometimes uses terms like "produce" and "provide" to describe the disclosed methods. These terms are high- level abstractions of the actual operations that are performed. The actual operations that correspond to these terms will vary depending on the particular implementation and are readily discernible by one of ordinary skill in the art. In some examples, values, procedures, or apparatus' are referred to as "lowest", "best", "minimum," or the like. It will be appreciated that such descriptions are intended to indicate that a selection among many used functional alternatives can be made, and such selections need not be better, smaller, or otherwise preferable to other selections.

Examples are described with reference to directions indicated as "above," "below," "upper," "lower," and the like. These terms are used for convenient description, but do not imply any particular spatial orientation.

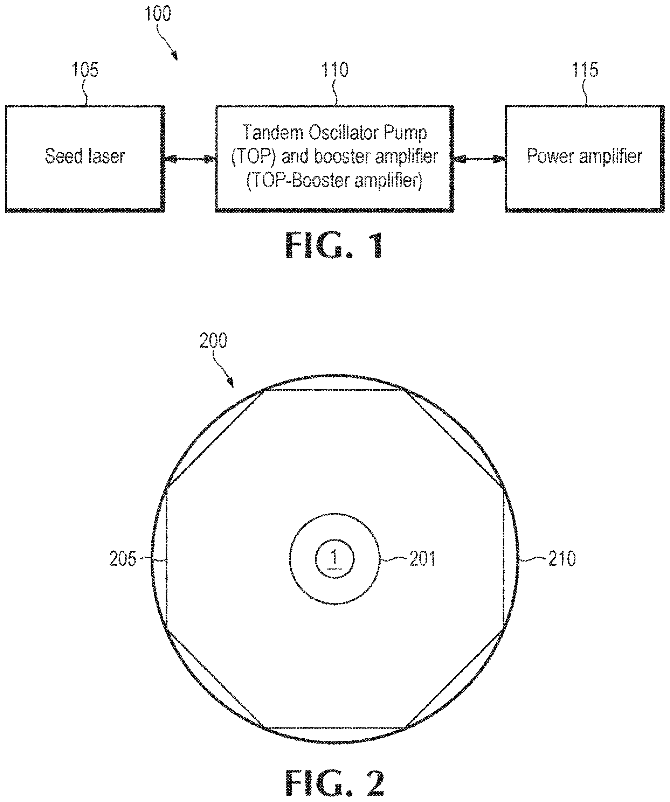

FIG. 1 illustrates a tandem pumped fiber amplifier 100. The tandem pumped fiber amplifier 100 may include a seed laser 105 with a selected center wavelength that may be pseudo random bit sequence (PRBS) phase-modulated to achieve necessary bandwidth to suppress SBS and keep coherence length long enough for SBC and CBC applications. The selected center wavelength may be in the range of 1020-1080nm for Yb-doped fiber, in some embodiments. The seed laser 105 may include a preamplifier (not shown) to generate sufficient power, e.g., greater than 20W of seed power for amplification in the subsequent sections.

Fiber of the seed laser 105 may be coupled to (e.g., spliced) with fiber of a tandem oscillator pump and booster amplifier (TOP-booster amplifier) 110, which may be coupled to (e.g., spliced) with fiber of a power amplifier 115. The TOP-booster amplifier 110 may include a first section of a single or plural active core fiber (e.g., a dual active core fiber), and at least one set of one or more diode pumps optically coupled, e.g., end-coupled, side-coupled, or the like, or combinations thereof, to the diode pump set.

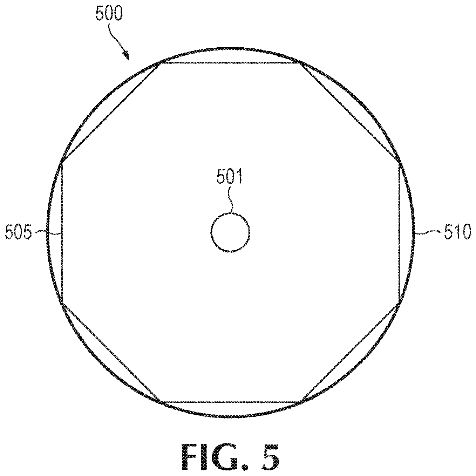

In a plural active core example, some the cores of the plural active core fiber (e.g., both of the cores of a dual active core fiber laser) may be arranged along a same axis or a different axis (e.g., coaxial with the second core symmetrically surrounding the first core or with the second core asymmetrically surrounding the first core). FIG. 2 illustrates a cross-section view of a coaxial-type dual active core fiber 200 that may be utilized in the tandem pumped fiber amplifier 100 of FIG. 1. The resulting arrangement is described for explanatory purposes but is not in accordance with claim 1. FIG. 5 illustrates a cross-section view of a single active core fiber 500 that may be utilized in the tandem pumped fiber amplifier 100 of FIG. 1, in some embodiments in accordance with claim 1.

Referring now to FIG. 2, the coaxial-type dual active core fiber 200 includes a first core 1 surrounded by a second core 201. The first core 1 may have a first diameter, and the second core 201 may have a second different diameter (e.g., a second larger diameter). The first diameter may be ~12.5µm and the second diameter may be ~35µm.

The first core 1 may be doped differently than the second core 201. The first core 1 may include a first doping concentration and the second core 201 may include a second doping concentration associated with a higher absorption coefficient. The first core 1 may include Yb-700 (Yb ~50 × 10²⁴ m⁻³) and the second core 201 may include with Yb-1200 (Yb ~120 × 10²⁴ m⁻³).

In some examples, the first core 1 may have a numerical aperture (NA) that is not greater than an NA of the second core 201. The first core 1 may have an NA of about 0.05 or less and the second core 201 may have an NA no less than 0.05, e.g., in the range of 0.05-0.10.

The fiber 200 may include a cladding 205 surrounding the cores 1 and 201, and a jacket 210. The cladding 205 may be a glass-clad multimode pump guiding octagonal core with a third diameter that is greater than the second diameter of the second core, e.g., ~800µm.

Referring now to FIG. 5, the single active core fiber 500 may include a first section (110, FIG. 1) and a second section (115, FIG. 1). The first section 110 may include a core 501 having a diameter of ~10-12µm. The core 501 of this section 110 may be doped with Yb-700 (Yb ~50 × 10²⁴ m⁻³). The core 501 of this section 110 may have an NA of about 0.05 (in one embodiment, 0.07).

The fiber 500 in the first section 110 may include a cladding 505 surrounding the core 501, and a jacket 510. The cladding 505 and the jacket 510 may be similar to any cladding or jacket described herein. The cladding 505 may be a glass-clad multimode pump guiding octagonal core with a diameter that is greater than the diameter of the core 501, e.g., ~800µm.

The second section 115 may include a core 501 having a diameter of ~17-35µm. The core 501 of this section 115 may be doped with Yb-700 (Yb ~50 × 10²⁴ m⁻³) and/or with a doping profile of 80-85% confined doping. The core 501 of this section 115 may have an NA of about 0.05 (in one embodiment, 0.07). The fiber 500 in the second section 115 may have a similar cladding 505 and jacket 510 as in the first section 110.

Referring again to FIG. 1, the TOP booster-amplifier 110 may include the first section of the single or plural active core fiber. The first section may include a first fiber Bragg grating (FBG) and a second FBG (e.g., an HR (highly reflective) FBG and a PR (partially reflecting) FBG, respectively), which may include diameters corresponding to core structure, e.g., the second core 201 (FIG. 2) or the core 501 (FIG. 5). The first and second FBGs may be centered at a selected wavelength to form a multi-mode oscillator which builds up necessary power for the tandem pump to be used by the power amplifier 115.

The selected wavelength may be less than a center wavelength of the seed laser. A difference may be 3% or less (e.g., 2.3%) in some examples and/or in a range of 0.1-6%. In this range, with a core structure having sufficient dimensions to suppress Modal Instability, and SBS. The selected wavelength may be in the range of 1010-1045nm (e.g., 1018nm), in one embodiment.

In some examples, the doping of the first core 1 (FIG. 2) or the core 501 (FIG. 5) may be selected to generate only sufficient single mode seed power while it is bi-chromatically pumped by both the multimode 976nm pump as well as the 1018nm tandem pump (which may be generated within the core structure). The oscillator of the first section of the single or plural active core fiber may use the doped core structure to convert most of the 976nm multi-mode pump power into 1018nm wavelength within the core structure. Residual unabsorbed 976nm pump (e.g., several percent) may enter the cladding of the second section of the single or plural active core fiber (e.g., the power amplifier 115) and be utilized, which may optimize overall efficiency (e.g., overall electrical-to-optical power conversion efficiency). An o-o efficiency corresponding to the first section may be 3% more efficient due to lower quantum defect when generating 1018nm wavelength compared to 1064nm amplifiers.

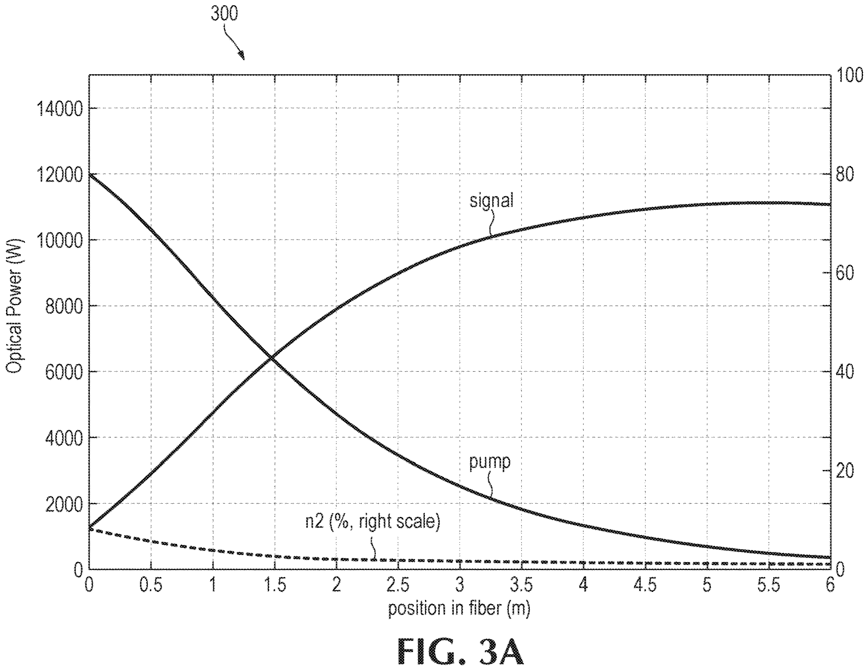

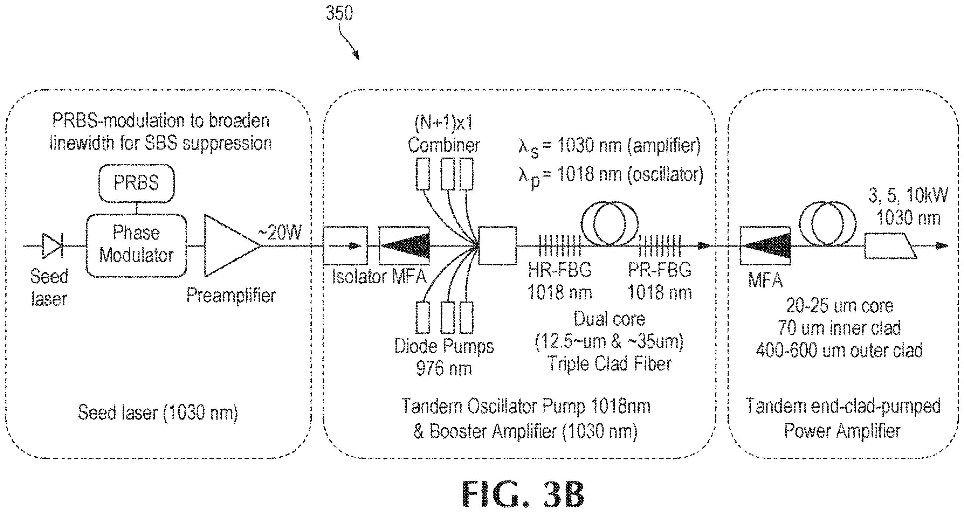

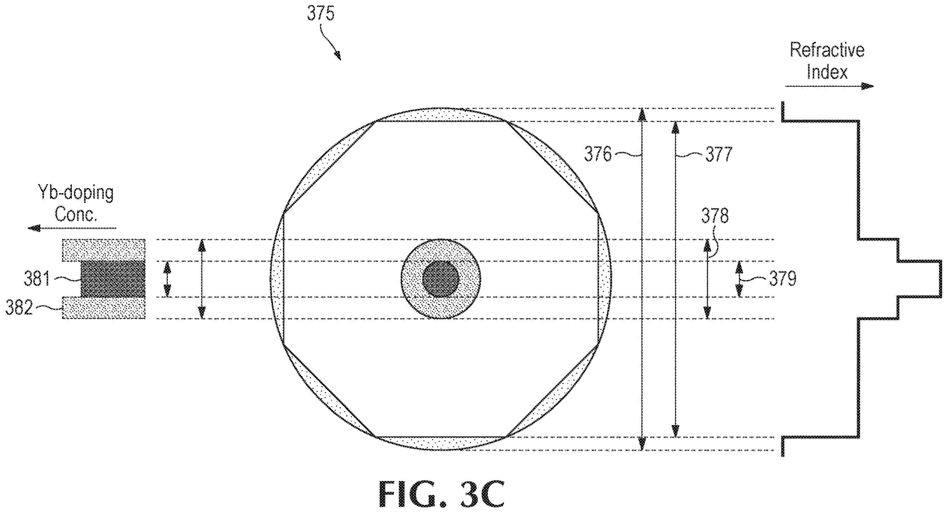

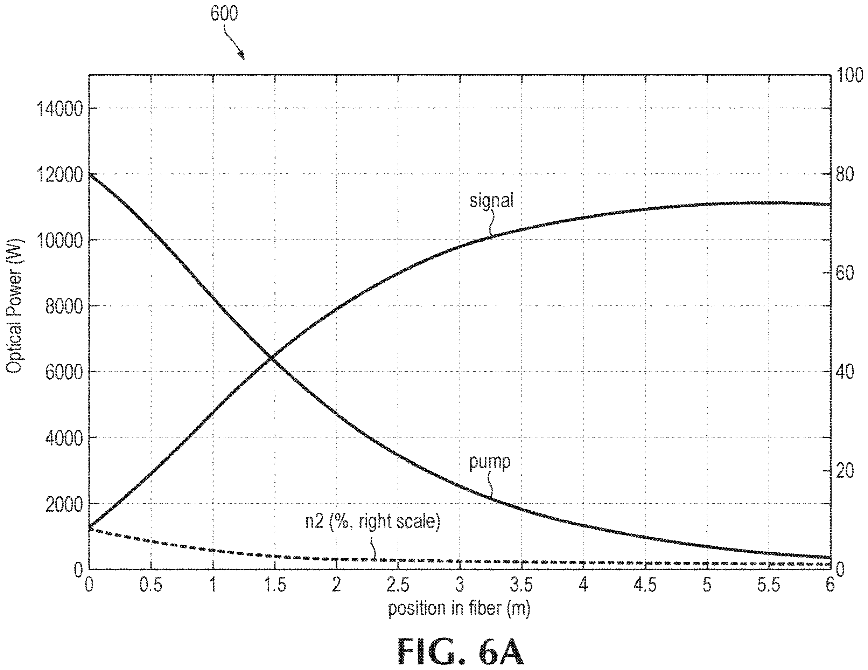

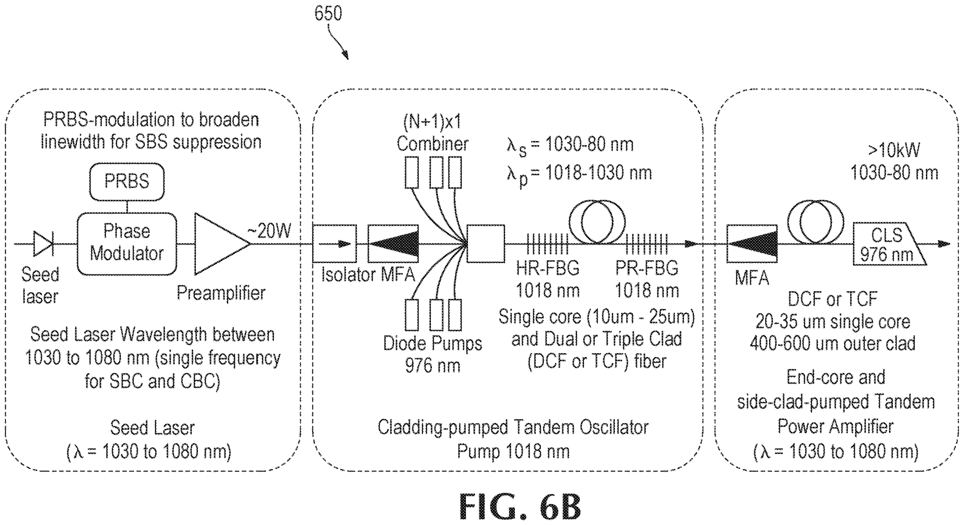

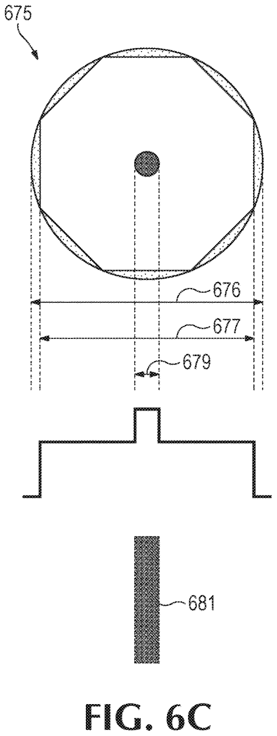

FIGS. 3A-C (dual active core example) illustrate, respectively, a graph 300 (FIG. 3A) of calculated signal power and tandem pump power inside a final power amplifier along with upper state population for a tandem pump fiber amplifier 350 (FIG. 3B), a block diagram of the tandem pump fiber amplifier 350, and a cross-section view of a dual-core and all-glass-fiber 375 (FIG. 3C) of the tandem pump fiber amplifier 350. FIGS. 6A-C (single active core embodiment) illustrate, respectively, a graph 600 (FIG. 6A) of calculated signal power and tandem pump power inside a final power amplifier along with upper state population for a tandem pump fiber amplifier 650 (FIG. 6B), a block diagram of the tandem pump fiber amplifier 650, and a cross-section view of a single active core and all-glass-fiber 675 (FIG. 6C) of the tandem pump fiber amplifier 650.

Modeling of the tandem pump fiber amplifier 350 (FIG. 3B) has shown an absorption of greater than 0.51dB (of 976nm and 1018nm) and greater than 15dB (of 976nm) in the second core. When the longest signal wavelength of 1080nm at 20W is launched into a first section of the fiber 375, greater than 1.27 kW of signal may be generated which can be amplified in the second section of the fiber 375. Modeling of the plural active core example of FIGS. 3A-C predicts greater than 83% conversion efficiency for the 976nm multimode pump into a 1018nm tandem pump, and power levels of greater than 12.5kW may be generated in the second core of the fiber 375 given a 10-meter-long oscillator. Results of this simulation are shown in the graph 300.

Modeling of the tandem pump fiber amplifier 650 (FIG. 6B) has shown similar results. In a ~8 meter "effective" fiber length, a core with Yb-700 may achieve absorption of greater than 0.51dB (of 976nm and 1018nm) and greater than 15dB (of 976nm) in the core. However, when the longest signal wavelength of 1080nm at 20W is launched into a first section of the fiber 375, greater than 10kW of signal may be generated which can be amplified in the second section of the fiber 675. Modeling of the single active core embodiment of FIGS. 6A-C predicts greater than 83% conversion efficiency for the 976nm multimode pump into a 1018nm tandem pump, and power levels of greater than 12.5kW may be generated in the core of the fiber 675 given a 10-meter-long oscillator and Yb-1200 doping. Results of this simulation are shown in the graph 600.

Referring now to FIGS. 3A-C, FIG. 3C shows a refractive index of the first core, the second core, the inner glass clad, as well as relative doping concentration in the cores. In this example, the values 376-379 may be, respectively, 880µm, 800µm, 35µm, and 12.5µm, and the core region 381 may include a first doping profile of Yb-700 ~50 × 10²⁴ m⁻³ and the core region 382 may include a second different profile of Yb-1200 ~120 × 10²⁴ m⁻³. In other examples, the values 376-379 may be, respectively, 880µm, 800µm, 35µm, and 14µm. FIG. 6C shows a refractive index of the core, the inner glass clad, as well as doping concentration in the core. In this embodiment, the values 676, 677, and 679 may be, respectively, 660-880µm, 600-800µm, and 10-12µm (oscillator fiber) / 17-35µm (power amplifier fiber), and the core region 681 may include a doping profile of Yb-700 ~50 × 10²⁴ m⁻³ (oscillator fiber and/or power amplifier fiber) or 80-85% confined doping in the core of the power amplifier fiber.

The seed laser of any tandem pump fiber amplifier described herein may be, for SBC or CBC, a single-mode semiconductor laser such as a distributed feedback (DFB) laser or a non-planar ring oscillator (NPRO) and phase modulated to suppress SBS (for other applications any appropriate single mode seed, e.g., any 20W single mode seed, may be used). The seed laser may be 1064nm.

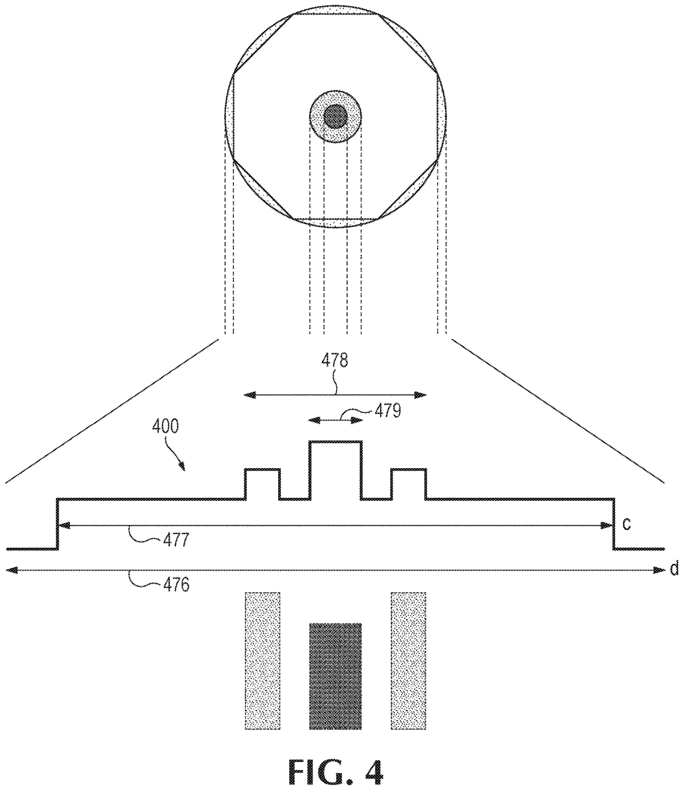

A TOP boost amplifier of the tandem pump fiber amplifier 350 (FIG. 3B) may include a dual active core and a plural clad, e.g., dual or triple clad. The inner core may be doped to generate sufficient power at seed wavelength need to enter the power amplifier stage. The outer multimode core may be doped to convert a portion (e.g., most) of the 976nm diode pump into the 1018nm tandem pump. The tandem oscillator pump may use HR and PR FBG's to generate a ~10nm bandwidth multi-mode oscillator using a combination of the inner and outer cores, which may be doped at the same level or differently. HR and PR FBG's may have the same core diameter as the outer multimode core of the TOP-booster gain amplifier. The seed wavelength that is injected into this stage may be amplified by both the 976nm multimode pump as well as the 1018nm tandem pump that is generated inside the oscillator cavity, e.g., with different absorption coefficient determined by the rare earth dopant absorption cross section at these wavelengths and the core-to-clad area ratios. The power scaling of this laser may be done by adding more diode pumps as needed to reach target power values, e.g., 3kW, 5kW, 10kW, etc. In some examples, the "effective multimode HR-FBG" may be one of the following types:
1. FBG written in Ge-doped fiber with a core diameter equal to 379 (FIG. 3C) or 479 (FIG. 4).
2. FBG written in Ge-doped fiber with a core diameter equal to 379 (FIG. 3C) or 479 (FIG. 4) and spliced to a passive chirally-coupled core fiber of the same core size so as to strip off the higher order modes so that reflectivity of the FBG is greater than 99%.
3. FBG written in grated-index (GRIN) fiber with an "effective core diameter" equal to 379 (FIG. 3C) or 479 (FIG. 4).
4. FBG written in GRIN fiber with an "effective core diameter" equal to 379 (FIG. 3C) or 479 (FIG. 4) and spliced to a passive chirally-coupled fiber of the same core size so as to strip off the higher order modes so that reflectivity of the FBG is greater than 99%.
5. FBG written in a multimode fiber with rings of alternating high-index and low index shells.
6. The seed wavelength that is injected into this stage may be amplified by both the 976nm multimode pump as well as the 1018nm tandem pump that is generated inside the oscillator cavity, e.g., with different absorption coefficient determined by the rare earth dopant absorption cross section at these wavelengths and the core-to-clad area ratios. The power scaling of this laser may be done by adding more diode pumps as needed to reach target power values, e.g., 3kW, 5kW, 10kW, etc.

The final power amplifier of the tandem pump fiber amplifier 350 may use all of the 1018nm tandem pump in the inner cladding and a portion (e.g., all) any residual 976nm light not absorbed in the oscillator but guided in the outer clad to amplify seed wavelength and mode-field-adaptor may be used to match the single mode beam in the TOP-booster fiber and the final power amplifier. Some examples may use a cladding light stripper (CLS) to strip off the residual 976nm pump before the output endcap.

Some examples include a plural active core fiber in a ~6 meter "effective" fiber length including a Yb-doped core region, an undoped inner clad region, and an outer clad region (e.g., an outer glass-clad). In one example, the dimensions of the doped core region, the undoped inner clad region, and the outer clad region may be 20-25µm, 70µm, and 400-600µm, respectively (pump guide may be 800µm). The plural active core fiber may include a final power amplifier including a mode-field adaptor to match the mode to a power amplifier section of the plural active core fiber. A 1018nm tandem pump may be guided in the inner clad region and may pump the signal in the innermost core of the plural active core fiber.

FIG. 4 illustrates a refractive index 400 of a fiber that is similar to the fiber 375 of FIG. 3C and includes a dual active core triple fiber clad. In this example, the values 476-479 are, respectively, 660-880µm, 600-800µm / .022 NA or higher, ~35µm (Yb-1200 doped annulus / 0.05 NA), ~10µm (Yb-700 doped / 0.065 NA).

Referring now to FIGS. 6A-C, a tandem oscillator pump and booster amplifier in accordance with the invention (TOP-booster amplifier) may include a core (10µm-25µm) and a plural clad (e.g., DCF or TCF). For a seed wavelength of 1030-1080nm, the pump wavelength may be 1018-1030nm. The TOP-booster amplifier may be coupled to (e.g., spliced) with fiber of a power amplifier. The power amplifier may include a core (20-35µm) and a plural clad (e.g., DCF or TCF). An outer clad may be 400-600µm. In some embodiments, the power amplifier comprises an end-core & side-clad-pumped tandem power amplifier with a wavelength of 1030 to 1080nm. The power scaling of this laser may be done by adding more diode pumps as needed to reach target powervalues of greater than 10kW.

The final power amplifier of the tandem pump fiber amplifier 650 may use all of the 1018nm tandem pump in the inner cladding and a portion (e.g., all) any residual 976nm light not absorbed in the oscillator but guided in the outer clad to amplify seed wavelength and mode-field-adaptor may be used to match the single mode beam in the TOP-booster fiber and the final power amplifier. Some embodiments may use a cladding light stripper (CLS) to strip off the residual 976nm pump before the output endcap.

In view of the many possible embodiments to which the principles of the disclosed technology may be applied, it should be recognized that the illustrated embodiments are only preferred examples and should not be taken as limiting the scope of the disclosure. I claim as my invention all that comes within the scope of the appended claims.

## Claims

1. A tandem pumped fiber amplifier for High Energy Laser (HEL) applications (100; 650), the apparatus comprising:
an optical fiber (500; 675) including a single active core (501), wherein a seed laser (105) is optically coupled to the single active core;
the optical fiber (500; 675) including a first section (110) to operate as a single active core oscillator and a second different section (115) to operate as a single active core power amplifier; and
wherein the seed laser (105) and one or more diode pumps are optically coupled to the first section of the optical fiber,
wherein the single active core (501) of the first section is doped to convert the one or more diode pumps into a tandem pump, wherein the one or more diode pumps and the tandem pump bi-chromatically pump the single active core power amplifier; and wherein the first section is configured to also act as a booster amplifier for the seed laser;
wherein a selected wavelength associated with the single active core oscillator is less than a center wavelength of the seed laser, wherein the single active core (501) is configured to suppress modal instability when a difference between the selected wavelength and the center wavelength is in a range of 0.1-8% and a greater than 10 kW final amplifier stage is employed as the single active core power amplifier.

2. The tandem pumped fiber amplifier (100; 650) of claim 1, wherein a center wavelength of the seed laser (105) is in a range of 1020-1080nm.

3. The tandem pumped fiber amplifier (100; 650) of claim 1, wherein the selected wavelength is in the range of 1010-1045nm.

4. The tandem pumped fiber amplifier of (100; 650) claim 1, wherein the single active core oscillator comprises a single mode or multimode oscillator.

5. The tandem pumped fiber amplifier (100; 650) of claim 1, wherein the set of one or more diode pumps comprises plural diode pumps, and the apparatus further comprises:
a combiner optically coupled between the plural diode pumps and first section of the optical fiber (500; 675).

6. The tandem pumped fiber amplifier (650) of claim 1, wherein the seed laser (105) comprises a preamplifier to generate greater than 20W of seed power.

7. The tandem pumped fiber amplifier (650) of claim 1, wherein the seed laser (105) is a pseudo random bit sequence (PRBS) phase-modulated.

8. The tandem pumped fiber amplifier (650) of claim 1, wherein the first section (110) includes a highly reflective fiber Bragg grating (HR-FBG) associated with the single active core oscillator and partially reflecting fiber Bragg grating (PR-FBG) associated with the single active core oscillator.

9. The tandem pumped fiber amplifier (100; 650) of claim 1, wherein the single active core suppresses modal instability at 3 kW or greater output power.

10. The tandem pumped fiber amplifier (100; 650) of claim 1, wherein a core-to-cladding area ratio is uniform through the entire length of the second different section.

11. The tandem pumped fiber amplifier (100; 650) of claim 1, wherein a diameter of the single active core on one boundary of boundaries of the second different section is the same as a diameter of the single active core on the other boundary of the boundaries of the second different section.

12. The tandem pumped fiber amplifier (100; 650) of claim 1, wherein the single active core of the single active core oscillator has a diameter of 10-25µm.

13. The tandem pumped fiber amplifier (100; 650) of claim 1, wherein the single active core of the single active core power amplifier has a diameter of 20-3 5 µm.

14. The tandem pumped fiber amplifier (100; 650) of claim 1, wherein the single active core power amplifier has an outer clad of thickness 400-600µm.

15. The tandem pumped fiber amplifier (100; 650) of claim 1, wherein the optical fiber comprises a plural clad.

## Patentansprüche

1. Tandemgepumpter Faserverstärker für Hochenergielaser- (HEL) Anwendungen (100; 650), wobei die Einrichtung umfasst:
eine optische Faser (500; 675), die einen einzelnen aktiven Kern (501) beinhaltet, wobei ein Seed-Laser (105) optisch mit dem einzelnen aktiven Kern gekoppelt ist;
wobei die optische Faser (500; 675) einen ersten Abschnitt (110), um als Oszillator mit einzelnem aktiven Kern zu arbeiten, und einen anderen zweiten Abschnitt (115) beinhaltet, um als Leistungsverstärker mit einzelnem aktiven Kern zu arbeiten; und
wobei der Seed-Laser (105) und eine oder mehrere Diodenpumpen optisch mit dem ersten Abschnitt der optischen Faser gekoppelt sind,
wobei der einzelne aktive Kern (501) des ersten Abschnitts dotiert ist, um die eine oder mehrere Diodenpumpen in eine Tandempumpe umzuwandeln, wobei die eine oder mehrere Diodenpumpen und die Tandempumpe den Leistungsverstärker mit einzelnem aktiven Kern bichromatisch pumpen; und wobei der erste Abschnitt konfiguriert ist, um auch als Booster-Verstärker für den Seed-Laser zu fungieren;
wobei eine ausgewählte Wellenlänge, die mit dem Oszillator mit einzelnem aktiven Kern verknüpft ist, kleiner ist als eine Mittenwellenlänge des Seed-Lasers, wobei der einzelne aktive Kern (501) konfiguriert ist, um eine modale Instabilität zu unterdrücken, wenn eine Differenz zwischen der ausgewählten Wellenlänge und der Mittenwellenlänge in einem Bereich von 0,1-8 % liegt, und wobei eine Endverstärkerstufe mit mehr als 10 kW als der Leistungsverstärker mit einzelnem aktiven Kern eingesetzt wird.

2. Tandemgepumpter Faserverstärker (100; 650) nach Anspruch 1, wobei eine Mittenwellenlänge des Seed-Lasers (105) in einem Bereich von 1020-1080 nm liegt.

3. Tandemgepumpter Faserverstärker (100; 650) nach Anspruch 1, wobei die ausgewählte Wellenlänge in dem Bereich von 1010-1045 nm liegt.

4. Tandemgepumpter Faserverstärker (100; 650) nach Anspruch 1, wobei der Oszillator mit einzelnem aktiven Kern einen Einmodus- oder Mehrmodus-Oszillator umfasst.

5. Tandemgepumpter Faserverstärker (100; 650) nach Anspruch 1, wobei der Satz aus einer oder mehreren Diodenpumpen mehrere Diodenpumpen umfasst, und die Einrichtung weiter umfasst:
einen Kombinierer, der optisch zwischen den mehreren Diodenpumpen und dem ersten Abschnitt der optischen Faser (500; 675) gekoppelt ist.

6. Tandemgepumpter Faserverstärker (650) nach Anspruch 1, wobei der Seed-Laser (105) einen Vorverstärker umfasst, um mehr als 20 W an Seed-Leistung zu erzeugen.

7. Tandemgepumpter Faserverstärker (650) nach Anspruch 1, wobei der Seed-Laser (105) eine phasenmodulierte pseudozufällige Bit-Sequenz (PRBS) ist.

8. Tandemgepumpter Faserverstärker (650) nach Anspruch 1, wobei der erste Abschnitt (110) ein hochreflektierendes Faser-Bragg-Gitter (HR-FBG), das mit dem Oszillator mit einzelnem aktiven Kern verknüpft ist, und ein teilweise reflektierendes Faser-Bragg-Gitter (PR-FBG), das mit dem einzelnen aktiven Kernoszillator verknüpft ist, beinhaltet.

9. Tandemgepumpter Faserverstärker (100; 650) nach Anspruch 1, wobei der einzelne aktive Kern die modale Instabilität bei 3 kW oder mehr an Ausgangsleistung unterdrückt.

10. Tandemgepumpter Faserverstärker (100; 650) nach Anspruch 1, wobei ein Verhältnis der Kern-zu-Mantel-Fläche über die gesamte Länge des anderen zweiten Abschnitts einheitlich ist.

11. Tandemgepumpter Faserverstärker (100; 650) nach Anspruch 1, wobei ein Durchmesser des einzelnen aktiven Kerns an einer Grenze von Grenzen des anderen zweiten Abschnitts der gleiche ist wie ein Durchmesser des einzelnen aktiven Kerns an der anderen Grenze der Grenzen des anderen zweiten Abschnitts.

12. Tandemgepumpter Faserverstärker (100; 650) nach Anspruch 1, wobei der einzelne aktive Kern des Oszillators mit einzelnem aktiven Kern einen Durchmesser von 10-25 µm aufweist.

13. Tandemgepumpter Faserverstärker (100; 650) nach Anspruch 1, wobei der einzelne aktive Kern des Leistungsverstärkers mit einzelnem aktiven Kern einen Durchmesser von 20-35 µm aufweist.

14. Tandemgepumpter Faserverstärker (100; 650) nach Anspruch 1, wobei der Leistungsverstärker mit einzelnem aktiven Kern eine äußere Ummantelung mit einer Dicke von 400-600 µm aufweist.

15. Tandemgepumpter Faserverstärker (100; 650) nach Anspruch 1, wobei die optische Faser eine Mehrfachummantelung umfasst.

## Revendications

1. Amplificateur à fibre pompé en tandem pour applications laser à haute énergie (HEL) (100 ; 650), l'appareil comprenant :
une fibre optique (500 ; 675) incluant un coeur actif unique (501), dans lequel un laser d'amorçage (105) est couplé optiquement au coeur actif unique ;
la fibre optique (500 ; 675) incluant une première section (110) destinée à fonctionner en tant qu'oscillateur à coeur actif unique et une seconde section (115) différente destinée à fonctionner en tant qu'amplificateur de puissance à coeur actif unique ; et
dans lequel le laser d'amorçage (105) et une ou plusieurs pompes à diode sont couplés optiquement à la première section de la fibre optique,
dans lequel le coeur actif unique (501) de la première section est dopé pour convertir les une ou plusieurs pompes à diode en une pompe tandem, dans lequel les une ou plusieurs pompes à diode et la pompe tandem pompent de manière bichromatique l'amplificateur de puissance à coeur actif unique ; et dans lequel la première section est configurée pour servir également de suramplificateur pour le laser d'amorçage ;
dans lequel une longueur d'onde sélectionnée associée à l'oscillateur à coeur actif unique est inférieure à une longueur d'onde centrale du laser d'amorçage, dans lequel le coeur actif unique (501) est configuré pour supprimer l'instabilité modale lorsqu'une différence entre la longueur d'onde sélectionnée et la longueur d'onde centrale est dans une plage de 0,1-8 % et un étage d'amplificateur final supérieur à 10 kW est employé comme amplificateur de puissance à coeur actif unique.

2. Amplificateur à fibre pompé en tandem (100 ; 650) selon la revendication 1, dans lequel une longueur d'onde centrale du laser d'amorçage (105) est dans une plage de 1020-1 080 nm.

3. Amplificateur à fibre pompé en tandem (100 ; 650) selon la revendication 1, dans lequel la longueur d'onde sélectionnée est dans la plage de 1 010-1 045 nm.

4. Amplificateur à fibre pompé en tandem (100 ; 650) selon la revendication 1, dans lequel l'oscillateur à coeur actif unique comprend un oscillateur monomode ou multimode.

5. Amplificateur à fibre pompé en tandem (100 ; 650) selon la revendication 1, dans lequel l'ensemble d'une ou plusieurs pompes à diode comprend plusieurs pompes à diode, et l'appareil comprend en outre :
un combinateur couplé optiquement entre les multiples pompes à diode et la première section de la fibre optique (500 ; 675).

6. Amplificateur à fibre pompé en tandem (650) selon la revendication 1, dans lequel le laser d'amorçage (105) comprend un préamplificateur pour générer plus de 20 W de puissance d'amorçage.

7. Amplificateur à fibre pompé en tandem (650) selon la revendication 1, dans lequel le laser d'amorçage (105) est une séquence de bits pseudo-aléatoires (PRBS) modulée en phase.

8. Amplificateur à fibre pompé en tandem (650) selon la revendication 1, dans lequel la première section (110) inclut un réseau de Bragg à fibre hautement réfléchissante (HR-FBG) associé à l'oscillateur à coeur actif unique et un réseau de Bragg à fibre partiellement réfléchissante (PR-FBG) associé à l'oscillateur à coeur actif unique.

9. Amplificateur à fibre pompé en tandem (100 ; 650) selon la revendication 1, dans lequel le coeur actif unique supprime l'instabilité modale à une puissance de sortie supérieure ou égale à 3 kW.

10. Amplificateur à fibre pompé en tandem (100 ; 650) selon la revendication 1, dans lequel un rapport de surface coeur-gaine est uniforme sur toute la longueur de la seconde section différente.

11. Amplificateur à fibre pompé en tandem (100 ; 650) selon la revendication 1, dans lequel un diamètre du coeur actif unique sur une limite des limites de la seconde section différente est le même qu'un diamètre du coeur actif unique sur l'autre limite des limites de la seconde section différente.

12. Amplificateur à fibre pompé en tandem (100 ; 650) selon la revendication 1, dans lequel le coeur actif unique de l'oscillateur à coeur actif unique présente un diamètre de 10-25 µm.

13. Amplificateur à fibre pompé en tandem (100 ; 650) selon la revendication 1, dans lequel le coeur actif unique de l'amplificateur de puissance à coeur actif unique présente un diamètre de 20-35 µm.

14. Amplificateur à fibre pompé en tandem (100 ; 650) selon la revendication 1, dans lequel l'amplificateur de puissance à coeur actif unique présente une gaine externe d'une épaisseur de 400-600 µm.

15. Amplificateur à fibre pompé en tandem (100 ; 650) selon la revendication 1, dans lequel la fibre optique comprend une gaine multiple.
